# EUROPÄISCHE PATENTSCHRIFT

(11) **EP 3 785 518 B1**
(45) Veröffentlichungstag und Bekanntmachung des Hinweises auf die Patenterteilung: **05.07.2023**
(21) Anmeldenummer: 19194689.6
(22) Anmeldetag: 30.08.2019
(51) Int. Cl.: A01D 34/416

(54) **FADENMÄHKOPF ZUR MONTAGE AN EINER ANTRIEBSWELLE EINES FREISCHNEIDERS**
THREAD MOWER HEAD FOR MOUNTING ON A DRIVE SHAFT OF A BRUSH CUTTER
TÊTE DE FAUCHEUSE À MONTER SUR UN ARBRE D'ENTRAÎNEMENT D'UNE DÉBROUSSAILLEUSE

(43) Veröffentlichungstag der Anmeldung: 03.03.2021
(73) Patentinhaber: Andreas Stihl AG & Co. KG, 71336 Waiblingen (DE)
(72) Erfinder: RETHABER, Achim, 70736 Fellbach (DE)
(74) Vertreter: Wasmuth, Rolf

(56) Entgegenhaltungen:
- EP-A1- 0 271 762
- US-A1- 2018 116 106
- US-A1- 2019 075 721
- US-B2- 8 429 886

## Beschreibung

Die Erfindung betrifft einen Fadenmähkopf zur Montage an einer Antriebswelle eines Freischneiders der im Oberbegriff des Anspruchs 1 angegebenen Gattung. Solch ein Fadenmähkopf ist aus der US 8429886 B2 bekannt.

Ein Freischneider dient zum Mähen von Gras, Gestrüpp oder Ähnlichem. Hierzu wird ein Fadenmähkopf mit einem Werkzeug um eine Drehachse des Fadenmähkopfes rotierend angetrieben, wodurch das Gras bei Kontakt mit dem Werkzeug abgeschnitten wird. Als Werkzeug wird üblicherweise unter anderem ein Schneidfaden eingesetzt, der im Betrieb des Fadenmähkopfes einem gewissen Verschleiß unterliegt. Dieser Verschleiß führt dazu, dass sich der Schneidfaden über seine Betriebsdauer verkürzt und die Schneidfunktion beeinträchtigt wird. Mit einem zu kurzen Schneidfaden ist das Mähen von Gras, Gestrüpp oder Ähnlichem nur noch kaum oder sogar nicht mehr möglich. Folglich muss der Schneidfaden durch einen neuen Faden ersetzt werden. Es sind Fadenmähköpfe mit Weiterschalteinrichtungen bekannt, die nach Betätigung dieser einen auf einer Fadenspule aufgewickelten Schneidfaden abwickeln und den aus dem Fadenmähkopf herausragenden Teil des Schneidfadens wieder längen. Dadurch wird die Schneidfunktion des Fadenmähkopfes wieder hergestellt.

Damit ein zu häufiges, vollständiges Nachladen des Schneidfadens auf die Fadenspule und damit auch eine Unterbrechung der Benutzung des Freischneiders vermieden werden kann, werden die Fadenspulen mit einem entsprechend großen Wickelvolumen ausgelegt. Ziel ist es dabei, möglichst viel Schneidfaden auf der Fadenspule aufwickeln zu können. Die Folge ist, dass die Baugröße der Fadenspule wie auch die des Fadenmähkopfes insbesondere in axialer Richtung zur Drehachse zunimmt. Eine derartige Größe der Fadenspulen wirkt sich jedoch negativ auf die Schnitthöhe des Fadenmähkopfes aus. Aufgrund des axialen Aufbaus der Fadenspule erhöht sich auch der Abstand vom Boden zum Schneidfaden an der Stelle, an der der Schneidfaden aus dem Gehäuse des Fadenmähkopfes ragt. Das zu mähende Gras kann nicht mehr in der gewünschten Höhe geschnitten werden.

Der Erfindung liegt die Aufgabe zugrunde, einen Fadenmähkopf zur Montage an einer Antriebswelle eines Freischneiders zu schaffen, der eine kompakte Bauform und zugleich ein hohes Wickelvolumen zur Aufnahme des Schneidfadens aufweist.

Diese Aufgabe wird durch einen Fadenmähkopf mit den Merkmalen des Anspruchs 1 gelöst.

Es ist vorgesehen, dass der Fadenmähkopf ein Gehäuse, eine Fadenspule für einen Schneidfaden mit mindestens einer Spulenwand, einem Gehäusedeckel und eine Weiterschaltvorrichtung umfasst. Die Weiterschaltvorrichtung umfasst einen Endanschlag. Die Fadenspule ist in der Betriebsstellung durch den Endanschlag mit dem Gehäuse drehfest verbunden. Die Fadenspule ist von der Betriebsstellung in Richtung der Drehachse in einen Außerbetriebszustand des Fadenmähkopfes zum Nachführen eines auf die Fadenspule aufgewickelten Schneidfadens durch das Aufbringen einer auf die Weiterschaltvorrichtung wirkenden Betätigungskraft verstellbar. Die Weiterschaltvorrichtung umfasst einen Drehanschlag, welcher eine Verdrehung der Fadenspule gegenüber dem Gehäuse in den Außerbetriebszustand begrenzt. Der Drehanschlag ist an einem Schlitz in der Spulenwand der Fadenspule ausgebildet.

Die handelsüblichen Weiterschalteinrichtungen für Fadenmähköpfe bilden einen solchen Drehanschlag durch eine partielle Erhöhung, also einen Aufbau der Spulenwand, in welche ein Gegenelement eingreifen kann. Durch die Ausbildung des Drehanschlags als Schlitz ist dieser in die Spulenwand integriert. Eine Erhöhung des Fadenmähkopfes in Richtung der Drehachse ist somit nicht notwendig. Dadurch kann die Bauhöhe der Fadenspule bei gleichbleibendem Wickelvolumen reduziert werden, wodurch eine kompakte Baugröße des Fadenmähkopfes erreicht wird.

Am Gehäuse ist ein in dem Außerbetriebszustand mit dem Schlitz zusammenwirkendes Eingriffselement angeordnet. Beim Übergang von der Betriebsstellung in den Außerbetriebszustand greift das Eingriffselement in den Schlitz ein. Die Fadenspule verdreht sich gegenüber dem Gehäuse bis das Eingriffselement an einer Umfangswand des Schlitzes, welche den Drehanschlag bildet, anschlägt und ein Weiterdrehen der Fadenspule gegenüber dem Gehäuse in dem Außerbetriebszustand begrenzt ist.

Der Schlitz ist als eine Öffnung ausgebildet. Demnach umfasst der Schlitz keinen Boden. Durch die Ausbildung des Schlitzes als Öffnung in der Spulenwand kann das Eingriffselement noch tiefer in den Schlitz eingreifen. Dadurch können beim Anschlagen des Eingriffselementes an dem am durch die Umfangswand des Schlitzes ausgebildeten Drehanschlag höhere Kräfte und Momente vom Gehäuse auf die Fadenspule übertragen werden.

Somit ist in der Spulenwand eine Öffnung, also ein bodenfreier Schlitz, ausgebildet, wodurch das Eingriffselement noch tiefer in den Schlitz eingreifen kann und eine bessere Kraft- bzw. Momentübertragung zwischen der Spule und dem Gehäuse gewährleistet ist.

Das Gehäuse weist bevorzugt einen im Wesentlichen horizontalen Abschnitt auf, der in etwa senkrecht zur Drehachse des Fadenmähkopfes liegt. Die Fadenspule weist vorteilhaft eine zum Gehäuse, insbesondere zum horizontalen Abschnitt des Gehäuses, benachbarte, obere Spulenwand auf, wobei der Schlitz vorzugsweise an der oberen Spulenwand der Fadenspule ausgebildet ist. Der horizontale Abschnitt geht vorteilhaft in einen Umfangsabschnitt des Gehäuses über, welcher sich koaxial zur Drehachse des Fadenmähkopfes erstreckt. Somit kann das Eingriffselement auch unmittelbar an dem Gehäuse, insbesondere an dem horizontalen Abschnitt des Gehäuses angeordnet sein, wodurch ein einfacher konstruktiver Aufbau des Fadenmähkopfes ermöglicht wird.

Der Schlitz erstreckt sich vorzugsweise über einen Winkelabschnitt kreisbogenförmig um die Drehachse, wobei der Winkelabschnitt vorzugsweise zwischen 30° und 70° beträgt. Mit Betätigung der Weiterschalteinrichtung in den Außerbetriebszustand taucht das Eingriffselement in den Schlitz und bewegt sich entlang des Schlitzes bis dieses an dem Drehanschlag des Schlitzes anschlägt. Durch das Anschlagen des Eingriffselementes am Drehanschlag wird die Spule in ihrer Relativdrehung zum Gehäuse abgebremst. Dabei dreht sich die Fadenspule gegenüber dem Gehäuse in etwa über den Winkelabschnitt, der vorzugsweise zwischen 30° und 70° beträgt. Das Eingriffselement weist eine sich in tangentialer Richtung zur Drehachse erstreckende Ausdehnung auf. Damit das Eingriffselement zum Zeitpunkt der Ausübung der Betätigungskraft unmittelbar in den Schlitz eintauchen kann, muss der Schlitz zumindest einen Teil der tangentialen Ausdehnung aufnehmen. Dadurch ist der Schlitz an seinem dem Drehanschlag entfernten Ende verlängert. Um diesen Betrag unterscheiden sich der Winkelabschnitt des Schlitzes und ein erster Verdrehwinkel der Fadenspule.

Vorteilhaft ist an dem Drehanschlag des Schlitzes eine Strukturerhebung vorgesehen. Die Strukturerhebung bewirkt eine Reduzierung der Flächenpressung am Drehanschlag beim Anschlagen des Eingriffselementes. Durch die Strukturerhebung wird die Kontaktfläche zwischen Eingriffselement und Drehanschlag vergrößert, wodurch sich die Flächenpressung reduziert. Dadurch werden Materialermüdungen vermieden und die Betriebsfestigkeit der Fadenspule erhöht. Die Strukturerhebung hat im Vergleich zu einem auf die Fadenspule aufgesetzten Mitnehmer eine deutlich geringere axiale Höhe, so dass sich diese kaum auf die Bauhöhe der Fadenspule auswirkt.

Es ist vorteilhaft vorgesehen, dass die Fadenspule ein Nabensegment zur Lagerung der Fadenspule gegenüber dem Gehäuse und ein an das Nabensegment anschließendes Fadenkammersegment zum Aufwickeln des Schneidfadens umfasst, wobei der Schlitz im Fadenkammersegment ausgebildet ist. Vorzugsweise weist der Schlitz einen in radialer Richtung zur Drehachse gemessenen minimalen Abstand zur Drehachse auf, der mindestens dem Abstand der engsten Fadenwicklung zur Drehachse entspricht. Der Abstand beträgt vorteilhaft mindestens 20%, insbesondere mindestens 25%, bevorzugt etwa 30% des Durchmessers der Fadenspule. Dies begünstigt die Kraft- und Momentübertragung zwischen dem Gehäuse und der Fadenspule. Ein maximaler Abstand des Schlitzes zur Drehachse ist vorteilhaft kleiner als der Abstand zwischen größtmöglicher Fadenwicklung und Drehachse. Der Schlitz liegt demnach in einem Bereich der Fadenspule, der in axialer Richtung die Fadenwicklung begrenzt. Dies begünstigt ebenfalls die Kraft- und Momentübertragung zwischen dem Gehäuse und der Fadenspule.

Der Endanschlag der Weiterschaltvorrichtung ist vorzugsweise am Gehäusedeckel angeordnet. Die Weiterschaltvorrichtung umfasst bevorzugt einen an der Fadenspule angeordneten Gegenanschlag. Vorteilhaft ist der Gegenanschlag in der Betriebsstellung mit dem Endschlag zur drehfesten Verbindung zwischen der Fadenspule und dem Gehäuse im Eingriff. In der Betriebsstellung der Weiterschaltvorrichtung kontaktiert der Endanschlag des Gehäusedeckels den Gegenanschlag der Fadenspule, wodurch die Fadenspule mit dem Gehäusedeckel und damit auch mit dem Gehäuse in Drehrichtung des Fadenmähkopfes drehfest verbunden ist. Die Fadenspule wird über ihren Gegenanschlag mittels des Endanschlages des Gehäusedeckels durch die Drehbewegung des Gehäusedeckels mitgenommen. Die Fadenspule und das Gehäuse drehen sich in Betriebsstellung gemeinsam in Drehrichtung des Fadenmähkopfes.

Es ist vorteilhaft vorgesehen, dass die Weiterschaltvorrichtung derart ausgebildet ist, dass sich die Fadenspule gegenüber dem Gehäuse mit Betätigung der Weiterschaltvorrichtung in den Außerbetriebszustand bis zum Anschlagen des Drehanschlags an dem Eingriffselement um einen ersten Verdrehwinkel verdreht. Nachdem die Weiterschaltvorrichtung in den Außerbetriebszustand geschaltet wurde und sich die Fadenspule samt Schlitz gedreht hat, bis das Eingriffselement am Drehanschlag des Schlitzes angeschlagen ist, wird die Fadenspule von dem Federelement in axialer Richtung zurück in ihre Ausgangslage, in der sich der Gegenanschlag und Endanschlag in axialer Richtung überdecken, in Richtung zum Gehäusedeckel bewegt. Dabei wird das Eingriffselement axial aus dem Schlitz der Fadenspule entfernt, wodurch die tangentiale Wirkverbindung zwischen Drehanschlag am Schlitz und dem Eingriffselement am Gehäuse aufgehoben wird. Die durch das Anschlagen des Eingriffselementes am Drehanschlag abgebremste Fadenspule kann ihre Relativdrehung zum Gehäuse fortsetzen.

Es ist vorteilhaft vorgesehen, dass sich die Fadenspule gegenüber dem Gehäuse ausgehend vom Anschlagen des Drehanschlags an dem Eingriffselement bis zum Anschlagen des Gegenanschlags an dem Endanschlag um einen zweiten Verdrehwinkel verdreht, wobei ein Gesamtdrehwinkel der Summe aus dem ersten Verdrehwinkel und dem zweiten Verdrehwinkel entspricht. Die Fadenspule dreht sich nun relativ zum Gehäuse weiter, bis der Endanschlag des Gehäusedeckels an dem Gegenanschlag der Fadenspule anschlägt und die Relativdrehung der Fadenspule begrenzt. Dieser Zustand der Weiterschaltvorrichtung, in welcher sich die Fadenspule axial vom Eingriffselement des Gehäuses entfernt und bis zum Anliegen an den Endanschlag des Gehäusedeckels relativ zum Gehäuse weiterdreht, stellt einen weiteren Abschnitt des Außerbetriebszustandes dar. In diesem weiteren Abschnitt des Außerbetriebszustandes dreht sich die Fadenspule über den zweiten Verdrehwinkel der Fadenspule. Die Weiterschalteinrichtung geht von dem weiteren Abschnitt des Außerbetriebszustandes in die Betriebsstellung über, sobald der Gegenanschlag an der Fadenspule an dem Endanschlag des Gehäusedeckels anschlägt und eine drehfeste Verbindung zwischen Gehäuse und Fadenspule in Drehrichtung des Fadenmähkopfes wieder hergestellt ist.

Mit jeder Betätigung der Weiterschalteinrichtung dreht sich die Fadenspule gegenüber dem Gehäuse vorzugsweise um den Gesamtdrehwinkel relativ zum Gehäuse. Der Gesamtdrehwinkel entspricht dem Winkel, der sich aus den Winkelabständen der Gegenanschläge bzw. der Endanschläge ergibt. In Umfangsrichtung zur Drehachse benachbarte Gegenanschläge bzw. Endanschläge weisen gleiche Winkelabstände auf, wodurch sich bei Anzahl vier ein Winkelabschnitt von 90° ergibt. Vorzugsweise entspricht die Anzahl der Endanschläge bzw. der Gegenanschläge auch der Anzahl an Drehanschlägen bzw. Eingriffselementen. Die Drehanschläge und die Eingriffselemente sind in ihrer Anordnung auf die Gegenanschläge und Endanschläge derart abgestimmt, dass bei Betätigung der Weiterschalteinrichtung die Weiterschalteinrichtung von der Betriebsstellung in den Außerbetriebszustand, in den weiteren Abschnitt des Außerbetriebszustandes und abschließend wieder in die Betriebsstellung geschaltet wird. Der Gesamtdrehwinkel ist der Winkel, den die Fadenspule bei einmaliger Ausübung einer Betätigungskraft relativ zum Gehäuse dreht. Der Gesamtdrehwinkel teilt sich dabei in den ersten Verdrehwinkel der Fadenspule und den zweiten Verdrehwinkel der Fadenspule auf, welchen die Fadenspule in ihrem Außerbetriebszustand zurücklegt. Der zweite Verdrehwinkel der Fadenspule, d.h. die Verdrehung im weiteren Abschnitt des Außerbetriebszustandes, entspricht der Differenz aus dem Gesamtdrehwinkel und dem ersten Verdrehwinkel. Der erste Verdrehwinkel ist vorteilhaft kleiner als der zweite Verdrehwinkel. Dadurch, dass der erste Verdrehwinkel kleiner als der zweite Verdrehwinkel gewählt ist, ergibt sich zwischen den in der Spulenwandung ausgebildeten, benachbarten Schlitzen eine stabile Stegbreite.

Die Betätigungskraft ist vorzugsweise über ein Betätigungselement auf die Weiterschaltvorrichtung aufgebracht, wobei sich das Betätigungselement aus einer Öffnung des Gehäusedeckels weg vom Gehäuse erstreckt. Dadurch ist das Betätigungselement für den Bediener sehr gut zugänglich. Die Fadenspule ist vorzugsweise durch das Federelement gegen den Gehäusedeckel vorgespannt. Dadurch ergibt sich eine Betätigungsrichtung der Weiterschaltvorrichtung in Richtung zum horizontalen Abschnitt des Gehäuses. Die Betätigungsrichtung liegt parallel zur Drehachse des Mähkopfes und ist zur Antriebswelle hin gerichtet. Um das Betätigungselement zu betätigen, ist es ausreichend, den Fadenmähkopf mit seiner Unterseite gegen den Boden zu drücken. Da das Betätigungselement aus dem Gehäusedeckel herausragt, kontaktiert das Betätigungselement den Boden und wird entgegen der Federkraft eingedrückt. Auf diese Weise verschiebt sich die mit dem Betätigungselement wirkverbundene Fadenspule in axialer Richtung, so dass eine Relativbewegung der Fadenspule zum Gehäuse freigegeben wird. Dieser Vorgang kann auch im Betrieb des Fadenmähkopfes erfolgen, wodurch ein Abwickeln des Schneidfadens von der Fadenspule auf einfache Weise ermöglicht wird.

Der Schlitz ist vorzugsweise von einer den Schlitz umlaufenden Umfangswand begrenzt. Folglich begrenzt die Umfangswand den Schlitz umfangsseitig in radialer Richtung von der Drehachse ausgehend nach außen und nach innen hin. Der Schlitz kann in einer alternativen Ausführung auch ein umfangsseitig offener Schlitz sein. In anderen Worten, kann der Schlitz in radialer Richtung von der Drehachse ausgehend nach außen hin geöffnet sein.

Vorzugsweise umfasst die Fadenspule einen Fadenkanal zum Einführen, insbesondere Durchführen, eines Schneidfadens. So kann der Schneidfaden in den Fadenkanal eingesteckt, insbesondere komplett hindurchgeführt, und anschließend durch Drehung der Fadenspule auf dieser aufgewickelt werden. Der Fadenkanal ist vorteilhaft in einer Spulenwand, insbesondere einer Zwischenspulenwand, der Fadenspule ausgebildet. Im Bereich des Fadenkanals ist die Spulenwand verdickt, so dass die Ausbildung des Fadenkanals zu Lasten des Volumens einer Fadenkammer geht. In der Fadenkammer ist der Schneidfaden aufwickelbar. Dadurch, dass die Weiterschalteinrichtung zumindest teilweise den Bauraum einer vorhandenen Wandung ausnutzt, kann der im Gehäuse vorhandene, so gewonnene axiale Bauraum der Höhe der Fadenkammer zugeschrieben werden und der Verlust des Volumens der Fadenkammer zumindest teilweise kompensiert werden.

Dadurch, dass sich die Weiterschalteinrichtung im Fadenkammersegment der Fadenspule, also in radialer Richtung innerhalb der Fadenkammer befindet, kann die Fadenkammer in radialer Richtung bis an das Gehäuse gezogen werden, wodurch ein relativ großer maximaler Wicklungsdurchmesser realisierbar und folglich ein großes Fadenvolumen auf der Fadenspule speicherbar ist.

Es kann zweckmäßig sein, alternativ oder zusätzlich den Gegenanschlag als Schlitz und den Endanschlag als Eingriffselement auszubilden. Der Schlitz wäre hierbei in einer unteren Spulenwand der Fadenspule und das Eingriffselement am Gehäusedeckel angeordnet.

Es kann auch zweckmäßig sein, dass das Betätigungselement nicht aus einer Öffnung des Gehäuses herausragt, sondern selbst mit dem Gehäuse anstelle der Fadenspule wirkverbunden ist. Dementsprechend wird bei Betätigung des Betätigungselementes das Gehäuse in axialer Richtung relativ zur Fadenspule ausgehoben. Hierdurch kommen die Endanschläge und Gegenanschläge außer Kontakt, es erfolgt eine Relativbewegung von Gehäuse und Fadenspule, mit einer ersten Verdrehung und einer zweiten Verdrehung des Gehäuses analog zur bereits beschriebenen ersten und zweiten Verdrehung der Fadenspule.

Ausführungsbeispiele der Erfindung werden im Folgenden anhand der Zeichnung erläutert. Es zeigen:
- Fig. 1: eine schematische Darstellung eines von einem Bediener gehaltenen Freischneiders,
- Fig. 2: eine Seitenansicht eines Ausführungsbeispiels eines Fadenmähkopfes,
- Fig. 3: eine Schnittdarstellung des Fadenmähkopfes nach Fig. 2 in der Betriebsstellung,
- Fig. 4: eine Schnittdarstellung des Fadenmähkopfes in Richtung des Pfeils IV nach Fig. 3 ,
- Fig. 5: eine Schnittdarstellung des Fadenmähkopfes in Richtung des Pfeils V nach Fig. 3,
- Fig. 6: eine Schnittdarstellung des Fadenmähkopfes nach Fig. 2 in der Außerbetriebsstellung und in zurückgelegtem erstem Verdrehwinkel der Fadenspule,
- Fig. 7: eine Schnittdarstellung des Fadenmähkopfes in Richtung des Pfeils VII nach Fig. 6,
- Fig. 8: eine perspektivische Darstellung der Fadenspule mit Spannring von oben,
- Fig. 9: eine ausschnittsweise perspektivische Darstellung des Schlitzes der Fadenspule,
- Fig. 10: eine Schnittdarstellung des Fadenmähkopfes nach Fig. 6 mit bereits eingenommener axialer Ausgangslage,
- Fig. 11: eine Schnittdarstellung des Fadenmähkopfes in Richtung des Pfeils XI nach Fig. 8 und ausstehendem zweiten Verdrehwinkel der Fadenspule,
- Fig. 12: eine perspektivische Darstellung der Fadenspule mit Spannring von unten,
- Fig. 13: eine Schnittdarstellung des Fadenmähkopfes mit Schneidfadenkanal,
- Fig. 14: eine perspektivische Darstellung des Gehäusedeckels.

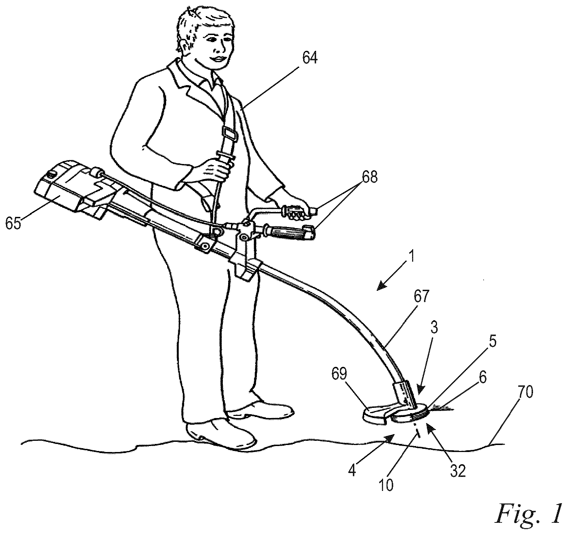

Fig. 1 zeigt in einer schematischen Darstellung einen Freischneider. Der Freischneider 1 wird von einem Bediener 64 gehalten. Der Freischneider 1 besitzt ein hinteres Ende mit einem hinteren Gehäuse 65 und ein vorderes Ende, aus dem eine nicht dargestellte Antriebswelle ragt. Ein Schaft 67 verbindet das hintere und das vordere Ende. Am Schaft 67 sind Handgriffe 68 zum Führen des Freischneiders 1 angeordnet. An das vordere Ende des Freischneiders 1 schließt ein Fadenmähkopf 5 an. Der Fadenmähkopf 5 ist an der Antriebswelle befestigt und wird rotierend um eine Drehachse 10 von einem nicht gezeigten Antriebsmotor in einer Drehrichtung 29 angetrieben. Der Antriebsmotor ist im hinteren Gehäuse 65 angeordnet, wobei im Schaft 67 eine Antriebswelle verläuft. Es kann vorgesehen sein, dass die Antriebswelle im Schaft unmittelbar mit der Antriebswelle für den Fadenmähkopf 5 verbunden ist, demnach kein Getriebe zwischengeschaltet ist. In einer alternativen, nicht dargestellten Ausführung kann der Antriebsmotor, der insbesondere ein Elektromotor ist, auch an einem nicht dargestellten vorderen Gehäuse 66, das am vorderen Ende angeordnet ist, angeordnet sein. Vorteilhaft befindet sich im vorderen Gehäuse auch ein Getriebe. Der Fadenmähkopf 5 ist an der im Betrieb dem Bediener 64 zugewandten Seite von einer Schutzhaube 69 abgedeckt. Der Fadenmähkopf 5 besitzt mindestens einen Schneidfaden 6, welcher zum Schneiden von Schnittgut wie Gras, Gestrüpp oder dgl. dient. Am Fadenmähkopf 5 ist eine im Betrieb dem Boden 70 zugewandte Unterseite 4 ausgebildet, die an der dem Schaft 67 abgewandten Seite des Fadenmähkopfs 5 angeordnet ist. An der dem Schaft zugewandten Seite des Fadenmähkopfes 5 ist die Oberseite 3 des Fadenmähkopfes 5 ausgebildet. Die vom Bediener 64 zwingend zu tragende Schutzkleidung für den Betrieb des Freischneiders 1 ist in der vereinfachten Darstellung in Fig. 1 nicht gezeigt.

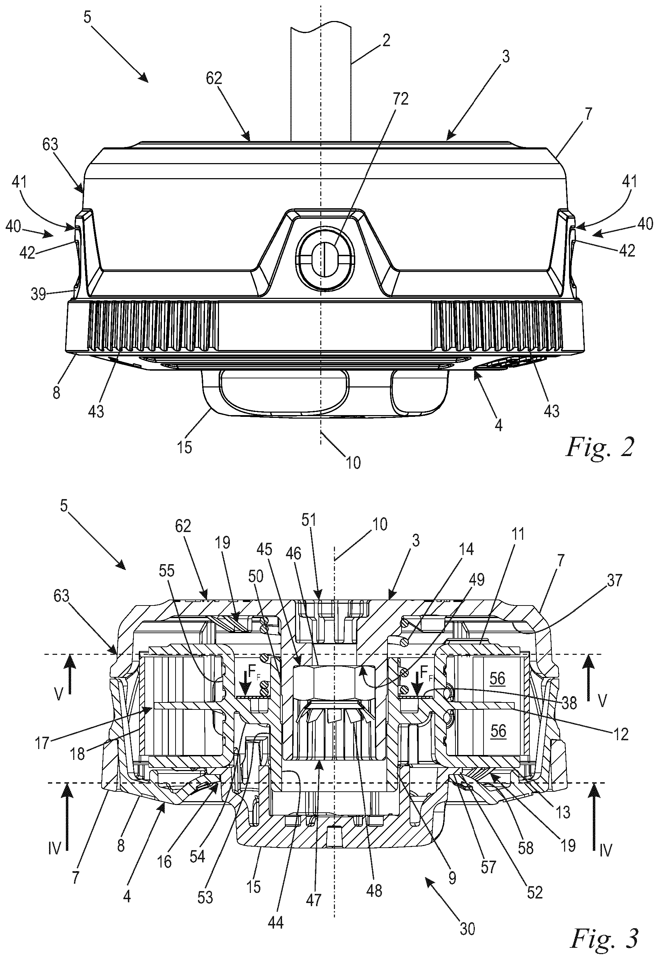

In Fig. 2 ist der Fadenmähkopf 5 in einer Seitendarstellung gezeigt. In dieser Darstellung sind lediglich ein Gehäuse 7, ein Gehäusedeckel 8, die Drehachse 10 sowie ein Betätigungselement 15 des Fadenmähkopfes 5 gezeigt. Das Gehäuse 7 ist topfartig ausgebildet und umfasst im Ausführungsbeispiel einen horizontalen Abschnitt 62, der in etwa senkrecht zur Drehachse 10 des Fadenmähkopfes 5 ausgerichtet ist. Der horizontale Abschnitt 62 geht im bevorzugten Ausführungsbeispiel in einen Umfangsabschnitt 63 des Gehäuses 7 über, welcher sich im Wesentlichen koaxial zur Drehachse 10 des Fadenmähkopfes 5 erstreckt. An dem Umfangsabschnitt 62 des Gehäuses 7 sind zwei sich gegenüberliegende Fadenöffnungen 72 vorgesehen, durch welche der Schneidfaden 6 aus dem Gehäuse 7 ragt. Es kann in einer alternativen Ausführung des Fadenmähkopfes 5 zweckmäßig sein, eine andere Anzahl an Fadenöffnungen 72 vorzusehen. Am Umfangsabschnitt 63 des Gehäuses 7 sind zwei Rastöffnungen 41 ausgebildet. Der Gehäusedeckel 8 umfasst zwei Rastnasen 42, die bei der Befestigung des Gehäusedeckels 8 in die Rastöffnungen 41 des Gehäuses 7 eingreifen. Eine Rastnase 42 bildet mit der zugehörigen Rastöffnung 41 eine wieder lösbare Schnappverbindung 40, mittels welcher der Gehäusedeckel 8 mit dem Gehäuse 7 fest verbunden ist. Unter fest verbunden wird hier eine relative Fixierung zueinander in allen Raumrichtungen verstanden. Im bevorzugten Ausführungsbeispiel sind Schnappverbindungen 40 aus jeweils einer Rastnase 42 und einer Rastöffnung 41 vorgesehen, wodurch eine ausreichende Haltekraft zwischen dem Gehäuse 7 und dem Gehäusedeckel 8 erreicht wird. In einer alternativen Ausführung des Fadenmähkopfes 5 kann auch eine andere Anzahl an Schnappverbindungen 40 zweckmäßig sein. Ist der Gehäusedeckel 8 auf dem Gehäuse 7 befestigt, ist die im Fadenmähkopf 5 befindliche Mechanik mit den dazugehörigen Bauteilen vor Verschmutzung geschützt.

Wie in Fig. 2 gezeigt, weist das Gehäuse 7mehrere Griffflächen 43 an einer Umfangsseite des Gehäuses 7 auf. Die Grifffläche 43 ist als Zahnung ausgebildet, wobei die einzelnen Zähne in etwa in Richtung der Drehachse 10 verlaufen. Die Griffflächen 43 dienen zum besseren Halten des Fadenmähkopfes 5. Bei der Befestigung des Fadenmähkopfes 5 auf der Antriebswelle 2, die in Fig. 2 schematisch angedeutet ist, wird der Fadenmähkopf 5 in montiertem Zustand auf die Antriebswelle 2 geschraubt. Die Griffflächen 43 an dem Gehäuse 7ermöglichen dem Bediener 64 einen rutschfesten Halt am Gehäuse 7 und erleichtern somit dem Bediener 64 das Aufschrauben des Fadenmähkopfes 5 auf die Antriebswelle 2 sowie das Lösen des Fadenmähkopfes 5. Im bevorzugten Ausführungsbeispiel sind vier gleichmäßig um die Umfangsseite des Gehäuses 7 verteilte Griffflächen 43 vorgesehen. Alternativ kann auch eine andere Anzahl an Griffflächen 43 zweckmäßig sein. Die Griffflächen 43 können auch andere Strukturen aufweisen.

In Fig. 3 ist der Fadenmähkopf 5 in einer geschnittenen Darstellung gezeigt. An dem Gehäuse 7 des Fadenmähkopfes 5 ist eine Aufnahme 45 ausgebildet, über welche der Fadenmähkopf 5 an der Antriebswelle 2 befestigt wird. Im bevorzugten Ausführungsbeispiel ist die Aufnahme 45 aus einer im Gehäuse 7 koaxial zur Drehachse 10 ausgerichteten Mutter 46 gebildet. Das Gehäuse 7 weist im Ausführungsbeispiel neben seinem horizontalen Abschnitt 62 und seinem Umfangsabschnitt 63 noch einen koaxial zur Drehachse 10 ausgerichteten hohlzylindrischen Abschnitt 50 auf. In dem hohlzylindrischen Abschnitt 50 ist ein Zwölfkantloch 47 ausgebildet, in welchem die Mutter 46 angeordnet ist, und drehfest gegenüber dem Gehäuse 7 gehalten ist. In Richtung der Drehachse 10 ist die Mutter 46 zur Oberseite 3 des Mähkopfes 5 hin durch eine Gehäuseschulter 49 abgestützt und zur Unterseite 4 hin über eine Zahnscheibe 48 gesichert. Ferner weist der Fadenmähkopf an seiner Oberseite 3 eine Öffnung 51 auf, durch welche die Antriebswelle 2 zur Befestigung des Fadenmähkopfes 5 hindurchgeführt und anschließend mit der Mutter 46 verschraubt wird. Es kann in alternativen Ausführungen auch zweckmäßig sein, die Antriebswelle 2 drehfest mit der Fadenspule 9 zu verbinden und das Gehäuse 7 über eine Weiterschaltvorrichtung 19 relativ zur Fadenspule 9 zu fixieren.

Wie in Fig. 3 gezeigt, umfasst der Fadenmähkopf eine Fadenspule 9 zum Auf- und Abwickeln des Schneidfadens 6. Ferner ist im Ausführungsbeispiel die Weiterschaltvorrichtung 19 vorgesehen, bei deren Betätigung sich die Fadenspule 9 um einen vorbestimmten Winkel gegenüber dem Gehäuse 7 dreht und dabei den Schneidfaden 6 von der Fadenspule 9 abwickelt.

Wie in Fig. 3 gezeigt, ist die Fadenspule 9 auf dem hohlzylindrischen Abschnitt 50 des Gehäuses 7 in Richtung der Drehachse 10 verschiebbar gehalten. Die Fadenspule 9 umfasst eine Nabe 44, die an einer Umfangsseite 53 des hohlzylindrischen Abschnitts 50 axial verschiebbar in Richtung der Drehachse 10 gelagert ist.

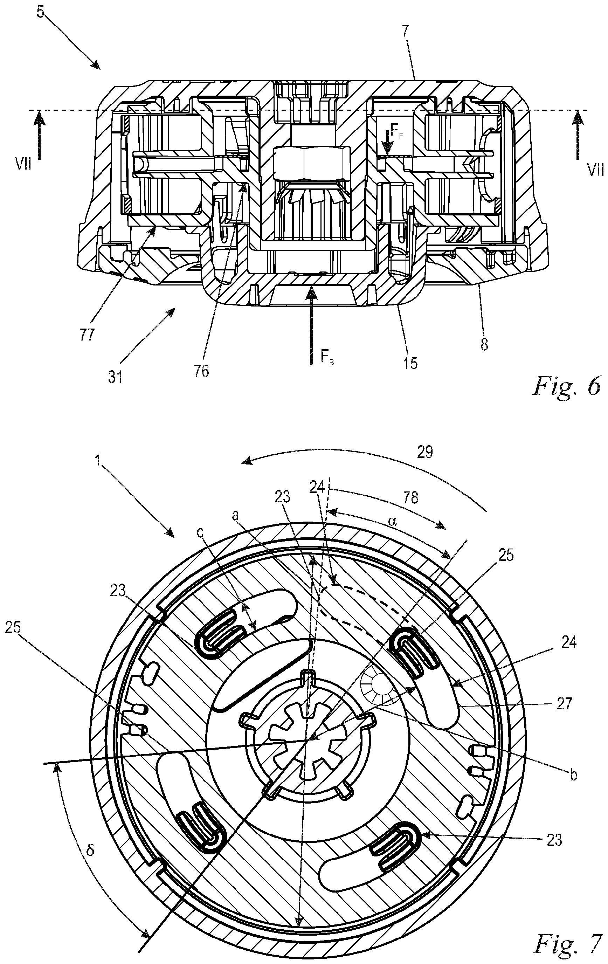

Wie in Fig. 3 gezeigt, erstreckt sich ausgehend von der Nabe 44 der Fadenspule 9 ein Steg 54 in radialer Richtung zur Drehachse 10 und geht in eine sich in Richtung der Drehachse 10 erstreckende Längswand 55 über. Die Fadenspule 9 weist im Ausführungsbeispiel mehrere Spulenwände 11, 12, 13 auf, nämlich eine obere Spulenwand 11, eine untere Spulenwand 13 und eine zwischen der oberen Spulenwand 11 und der unteren Spulenwand 13 angeordnete Zwischenspulenwand 12. Die obere Spulenwand 11 ist benachbart zum horizontalen Abschnitt 62 des Gehäuses 7 und die untere Spulenwand 13 benachbart zum Gehäusedeckel 8 angeordnet. Die Spulenwände 11, 12, 13 sind über die Längswand 55 miteinander verbunden. Die Fadenspule 9 weist eine Fadenkammer 56 zum Aufwickeln des Schneidfadens 6 auf, das in Richtung der Drehachse 10 zur Oberseite 3 des Fadenmähkopfes 5 hin von der oberen Spulenwand 11 und zur Unterseite 4 des Fadenmähkopfes 5 hin durch die untere Spulenwand 13 begrenzt ist. In radialer Richtung zur Drehachse 10 hin ist die Fadenkammer 56 durch die Längswand 55 des Fadenmähkopfes 5 begrenzt. Der Schneidfaden 6 ist über die gesamte Fadenkammer 56, zwischen der oberen Spulenwand 11 und der unteren Spulenwand 13 abzüglich der Zwischenspulenwand 12 aufwickelbar. Wie in der Fig. 7 dargestellt, ist die Fadenspule 9 in radialer Richtung zur Drehachse 10 in ein Nabenkammersegment 76 und ein Fadenkammersegment 77 zu unterteilen. Dabei entsprechen die Begrenzungen des Fadenkammersegmentes 77 auch den Begrenzungen der Fadenkammer 56. Demnach sind der Steg 54 der Fadenspule 9 sowie die Nabe 44 der Fadenspule 9 selbst dem Nabenkammersegment 76 zuzuordnen. Der Schlitz 24 mit dem Drehanschlag 23 ist im Bereich des Fadenkammersegmentes 77 an der Fadenspule 9 ausgebildet.

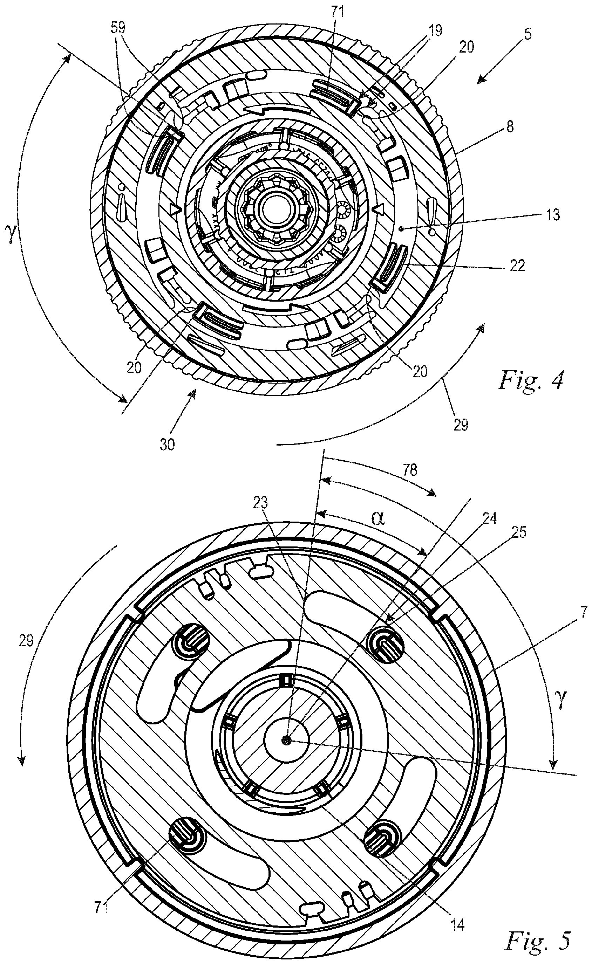

Wie in Fig. 4 gezeigt, ist am Gehäusedeckel 8 ein Endanschlag 20 vorgesehen, der auf einer Deckelinnenseite 58, also der dem Gehäuse 7 zugewandten Seite des Gehäusedeckels 8, angeordnet ist. An der Fadenspule 9 ist ein Gegenanschlag 22 vorgesehen, der an der unteren Spulenwand 13 auf der dem Gehäusedeckel 8 zugewandten Seite angeordnet ist. Der Endanschlag 20 und der Gegenanschlag 22 sind Teil der Weiterschaltvorrichtung 19. In der in Fig. 3 gezeigten Betriebsstellung 30 der Weiterschaltvorrichtung 19 wirkt der Endanschlag 20 am Gehäusedeckel 8 auf den Gegenanschlag 22 der Fadenspule 9 in Drehrichtung 29 des Fadenmähkopfes 5.

Der Endanschlag 20 und der Gegenanschlag 22 kontaktieren sich in einer Anschlagsfläche 59, wodurch die Fadenspule 9 durch den Gehäusedeckel 8 in Drehrichtung 29 des Fadenmähkopfes 5 mitgenommen wird. Dabei bilden der Endanschlag 20 und der Gegenanschlag 22 eine formschlüssige Verbindung in Drehrichtung 29 des Fadenmähkopfes 5. Dadurch sind die Fadenspule 9 und der Gehäusedeckel 8, somit auch die Fadenspule 9 und das Gehäuse 7 in Drehrichtung 29 miteinander verbunden. In dieser Betriebsstellung 30 der Weiterschaltvorrichtung 19 kann der Fadenmähkopf 5 durch den Bediener 66 zum Schneiden von Gras, Gestrüpp oder Ähnlichem eingesetzt werden.

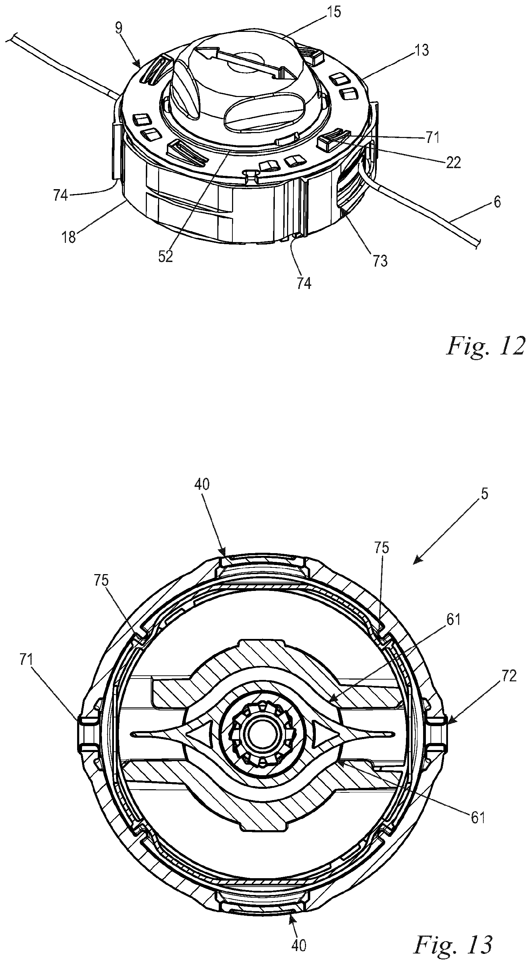

Wie in Fig. 12 gezeigt, sind die Gegenanschläge 22 an der unteren Spulenwand 13 der Fadenspule 9 in Drehrichtung 29 abgeschrägt. Dadurch entsteht eine Art Rampe 71 des Gegenanschlags 22. Analog sind auch die Endanschläge 20 entgegen der Drehrichtung 29 in Form einer Rampe 71 abgeschrägt. Somit sind die Fadenspule 9 und der Gehäusedeckel 8 in Drehrichtung 29 formschlüssig gehalten, entgegen der Drehrichtung 29 ist hingegen eine Relativdrehung möglich, da der Endanschlag 20 und der Gegenanschlag 22 auf ihren Rampen 71 aufeinander abgleiten. Eine formschlüssige Verbindung durch den Endanschlag 20 und den Gegenanschlag 22 ist entgegen der Drehrichtung 29 nicht gegeben.

Wie in Fig. 4 gezeigt, sind im bevorzugten Ausführungsbeispiel vier Endanschläge 20 und vier Gegenanschläge 22 vorgesehen, die jeweils in gleichem Abstand zur Drehachse 10 angeordnet und gleichmäßig um die Drehachse 10 verteilt sind. Bei einer gleichmäßigen Verteilung der vier Endanschläge 20 ergibt sich ein Gesamtwinkelabstand γ benachbarter Endanschläge um die Drehachse 10 von 90°. Gleiches gilt auch für die Gegenanschläge 22 an der Fadenspule 9. In einem alternativen Ausführungsbeispiel kann auch eine andere Anzahl an Endanschlägen 20 sowie an Gegenanschlägen 22 zweckmäßig sein. Die Anzahl der Endanschläge 20 am Gehäuse 7 entspricht der Anzahl der Gegenanschläge 22 an der Fadenspule 9. Durch die vier Paarungen aus Endanschlägen 20 und Gegenanschlägen 22 können hohe Drehmomente vom Gehäusedeckel 8 auf die Fadenspule 9 übertragen werden.

Wie in Fig. 3 gezeigt, umfasst der Fadenmähkopf 5 ein Federelement 14, das zwischen dem Gehäuse 7 und der Fadenspule 9 angeordnet ist. Die Fadenspule 9 wird durch das Federelement 14 in Richtung zur Unterseite 4 des Fadenmähkopfes 5, in anderen Worten, in Richtung zum Gehäusedeckel 8 vorgespannt.

Das Federelement 14 ist im bevorzugten Ausführungsbeispiel als eine Schraubenfeder ausgeführt, wobei die Schraubenfeder koaxial zur Drehachse 12 angeordnet ist. Das Gehäuse 7 weist eine dem Gehäusedeckel 8 zugewandte Innenseite 37 auf, gegen welche das Federelement 14 abgestützt ist. In Richtung zur Unterseite 4 des Fadenmähkopfes 5 liegt das Federelement 14 an einer auf dem Steg 54 der Fadenspule 9 angeordneten Anlageplatte 38 an. Dabei drückt das Federelement 14 die Anlageplatte 38 gegen den Steg 54, wodurch die Fadenspule 9 in Richtung zum Gehäusedeckel 8 gespannt ist. Das Federelement 14 ist in der Betriebsstellung 30 der Weiterschalteinrichtung 19 vorgespannt. Das Federelement 14 wirkt abgestützt an dem Gehäuse 7 mit einer Federkraft F_{F} auf die Fadenspule 9 in Richtung zum Gehäusedeckel 8.

Wie in den Figuren 2 und 3 gezeigt, ist das Betätigungselement 15 auf der Unterseite 4 des Fadenmähkopfes angeordnet und dient zur Betätigung der Weiterschaltvorrichtung 19. Der Gehäusedeckel 8 weist eine koaxial zur Drehachse 10 ausgerichtete Öffnung 16 auf, durch welche das Betätigungselement 15 ragt. Dadurch ist das Betätigungselement 15 für den Bediener 66 in montiertem Zustand des Fadenmähkopfes 5 zugänglich. Das Betätigungselement 15 weist eine Schulter 52 auf, welche sich in radialer Richtung von der Drehachse 10 ausgehend erstreckt. Die Fadenspule 9 liegt mit ihrer unteren Spulenwand 13 an der Schulter 52 des Betätigungselementes 15 an und drückt diese gegen eine benachbart zur Öffnung 16 ausgebildete Spannfläche 57 des Gehäusedeckels 8. Demnach ist das Betätigungselement 15 über die Fadenspule 9 durch das Federelement 14 mit der Federkraft F_{F} gegen den Gehäusedeckel 8 gespannt.

Wie in den Figuren 6 und 7 gezeigt, weist die Fadenspule 9 mehrere Drehanschläge 23 auf, die mit einer entsprechenden Anzahl an Eingriffselementen 25, die an der Innenseite 37 des Gehäuses 7 ausgebildet sind, zusammenwirken. Auch die Eingriffselemente 25 sowie die Drehanschläge 23 sind Teil der Weiterschaltvorrichtung 19.

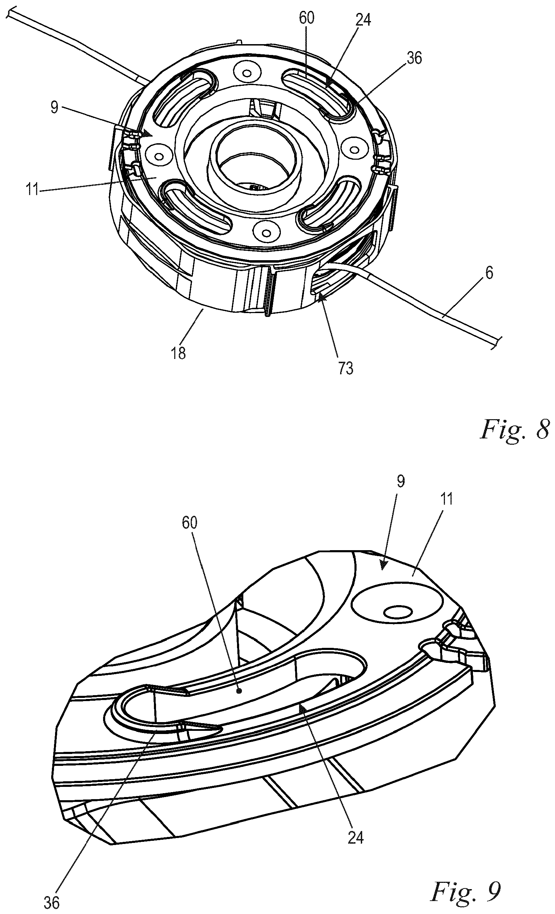

Wie in den Figuren 7 und 8 gezeigt, sind an der oberen Spulenwand 11 der Fadenspule 9 vier Drehanschläge 23 vorgesehen, die jeweils an einem Schlitz 24 in der oberen Spulenwand 11 ausgebildet sind. Die Drehanschläge 23 sind an dem in Drehrichtung liegenden Ende der Schlitze 24 ausgebildet. Im Außerbetriebszustand 31 dreht sich die Fadenspule 9 relativ zum Gehäuse 7 entgegen der Drehrichtung 29 in eine relative Drehrichtung 78. Die Drehanschläge 23 liegen an dem nachlaufenden Ende der Schlitze 24 bezüglich der relativen Drehrichtung 78 des Fadenmähkopfes 5. Die Schlitze 24 schlagen jeweils mit ihrem nachlaufenden Ende gegen die am vorlaufenden Ende eintauchenden Eingriffselemente 25. Die Schlitze 24 erstrecken sich über einen Winkelabschnitt δ um die Drehachse 10, wobei der Winkelabschnitt δ in etwa 30° bis 70° beträgt. Die Drehanschläge 23 sind analog den Endanschlägen 20 sowie den Gegenanschlägen 22 in einem Gesamtwinkelabstand γ von 90° angeordnet. In einer alternativen Ausführung des Fadenmähkopfes 5 kann auch eine andere Anzahl an Drehanschlägen 23 und damit auch ein anderer Gesamtwinkelabstand γ zweckmäßig sein. Der Schlitz 24 weist einen in radialer Richtung zur Drehachse 10 gemessenen Abstand b zur Drehachse 10 auf, wobei der Abstand b mindestens 20%, insbesondere mindestens 25%, bevorzugt etwa 30% des Durchmessers a der Fadenspule 9 entspricht. Zudem weist der Schlitz 24 eine in radialer Richtung zur Drehachse 10 gemessene Breite b auf, die mindestens 5%, vorzugsweise mindestens 10%, bevorzugt in etwa 15% des Durchmessers a der Fadenspule 9 entspricht.

Der Schlitz 24 ist an seinen in Umfangsrichtung liegenden Enden abgerundet. Dadurch wird die durch die Wandstärke der Fadenspule 9 limitierte Kontaktfläche vergrößert und damit die Flächenpressung reduziert. Weiterhin werden Kerbwirkungen reduziert.

Wie in den Figuren 6 und 7 gezeigt, sind an der Innenseite 37 des Gehäuses 7 im horizontalen Abschnitt 62 mehrere Eingriffselemente 25 angeordnet. Die Anzahl der Eingriffselemente 25 sowie der Gesamtwinkelabstand γ benachbarter Eingriffselemente 25 zueinander entspricht den Drehanschlägen 23. Im bevorzugten Ausführungsbeispiel sind die Eingriffselemente 25 als U-förmige Erhebungen ausgebildet, die sich ausgehend von der Innenseite 37 des Gehäuses 7 in Richtung der Drehachse 10 zur Unterseite 4 des Fadenmähkopfes 5 hin erstrecken. Durch die U-förmige Ausbildung der Eingriffselemente 25 liegen die Eingriffselemente bei Kontakt mit dem abgerundeten Drehanschlag 23 am Schlitz 24 bündig an. Wie in Fig. 3 zu erkennen, sind die Eingriffselemente 25 entgegen der Drehrichtung 29 abgeschrägt.

Wie in den Figuren 8 und 9 gezeigt, ist im bevorzugten Ausführungsbeispiel der Schlitz 24 als eine Öffnung in der oberen Spulenwand 11 ausgebildet. Ein Schlitz 24 im Sinne der Erfindung kann also ein Schlitz mit einem Boden, aber auch ein Schlitz 24 ohne Boden, also eine Öffnung sein. Der Schlitz 24 ist im bevorzugten Ausführungsbeispiel von einer den Schlitz 24 umlaufenden Umfangswand 60 begrenzt. Folglich begrenzt die Umfangswand 60 den Schlitz 24 umfangsseitig radial nach innen und außen zur Drehachse 10. In einem alternativen Ausführungsbeispiel kann der Schlitz 24 auch ein umfangsseitig nach außen offener Schlitz sein. In anderen Worten, kann der Schlitz in radialer Richtung von der Drehachse 10 ausgehend nach außen hin geöffnet sein. Der zwischen benachbarten Schlitzen 24 ausgebildete Steg steht hierbei jedoch vorteilhaft nicht radial über die untere Spulenwand 13 der Fadenspule 9 über.

Wie in den Figuren 8, 9 und 10 zu erkennen, ist an dem in Drehrichtung 29 liegenden Ende des Schlitzes 24 eine Strukturerhebung 36 vorgesehen, die bei Kontakt zwischen dem Eingriffselement 25 und dem Drehanschlag 23 die Flächenpressung an dem Drehanschlag 23 reduziert. Dadurch wird die auf den Drehanschlag 23 wirkende Belastung reduziert, wodurch sich die Betriebsdauer des Fadenmähkopfes 5 erhöht.

Nachfolgend ist der Abwickelvorgang des Schneidfadens 6 bei Betätigung der Weiterschalteinrichtung 19 erklärt:
In Fig. 3 ist die Weiterschaltvorrichtung 19 in ihrer Betriebsstellung 30 gezeigt. Der Endanschlag 20 des Gehäusedeckels 8 sowie der Gegenanschlag 22 der Fadenspule 9 sind im Eingriff und bilden eine in Drehrichtung 29 des Fadenmähkopfes 5 formschlüssige Verbindung. In Fig. 6 ist die Weiterschaltvorrichtung 19 in dem Außerbetriebszustand 31 gezeigt, in welchem die Fadenspule 9 auch bereits einen ersten Verdrehwinkel α (Fig. 54) zurückgelegt hat. Das Betätigungselement 15 ist über eine Betätigungskraft F_{B} entgegen der Federkraft F_{F} gedrückt und schiebt dabei die Fadenspule 9 in Richtung zur Oberseite 3 des Fadenmähkopfes 5, also in Richtung zur Antriebswelle 2. Dabei wird die Wirkverbindung zwischen dem Endanschlag 20 des Gehäusedeckels 8 und dem Gegenanschlag 22 der Fadenspule 9 aufgehoben. Gleichzeitig tauchen die Eingriffselemente 25 am Gehäuse 7 in die Schlitze 24 an der oberen Spulenwand 11 der Fadenspule 9 ein. Dabei greifen die Eingriffselemente 25 axial von oben in die Schlitze 24 ein, also in Richtung von der Oberseite 3 zur Unterseite 4 in Richtung der Drehachse 10. Die Fadenspule 9 dreht sich gegenüber dem Gehäuse 7 entgegen der Drehrichtung 29 bis die Eingriffselemente 25 des Gehäuses 7 an dem Drehanschlag 23 der Schlitze 24 anschlagen. Durch die auf den Schneidfaden 6 wirkende Fliehkraft wird der Schneidfaden 6 tangential zur Fadenspule 9 gezogen, wodurch sich die Fadenspule 9 in eine relative Drehrichtung 78 gegenüber dem Gehäuse 7 verdreht.

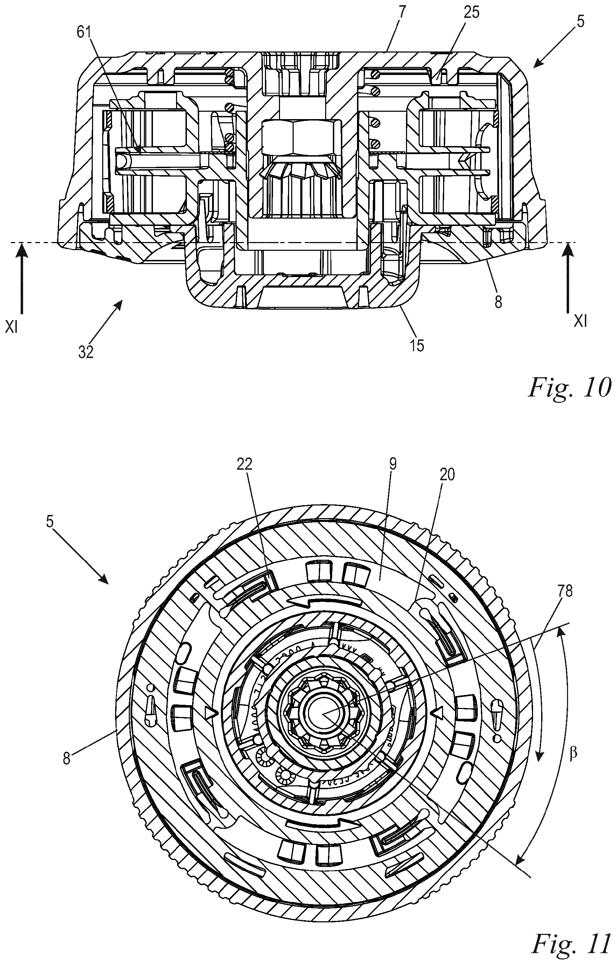

Bei der Relativbewegung zwischen Fadenspule 9 und Gehäuse 7 wird der Schneidfaden 6 um einen entsprechenden Winkelabschnitt von der Fadenspule 9 abgewickelt, der dem ersten Verdrehwinkel α der Fadenspule 9 entspricht. Der erste Verdrehwinkel α ist etwas geringer als der Winkelabschnitt δ des Schlitzes 24, da das Eingriffselement 25 zuerst in den Schlitz 24 eintaucht und sich folglich nur noch um die Länge des Schlitzes 24 abzüglich der eingetauchten Eigenlänge des Eingriffselementes 25 drehen kann. Sobald das Eingriffselement 25 an dem Drehanschlag 23 des Schlitzes 24 zur Anlage kommt, wird die Relativbewegung der Fadenspule 9, die entgegen der Drehrichtung 29 des Fadenmähkopfes 5 in die relative Drehrichtung 78 der Fadenspule 9 verläuft, abgebremst. In Fig. 5 ist das Eingriffselement 25 in den Schlitz 24 eingetaucht. Die Fadenspule 9 muss sich um den ersten Verdrehwinkel α in relativer Drehrichtung 78 verdrehen, damit der Drehanschlag 23 der Fadenspule 9 an dem Eingriffselement 25 des Gehäuses 7 anschlägt. In Fig. 7 hat sich die Fadenspule 9 mit dem Drehanschlag 23 um den ersten Verdrehwinkel α gedreht, wodurch der Drehanschlag 23 mit dem Eingriffselement 25 in Kontakt steht. Der gestrichelt dargestellte Schlitz 24 verdeutlicht die Lage der Fadenspule 9 mit dem Schlitz 24 noch vor der ersten Verdrehung α. In dieser Position wird die Fadenspule 9, sofern keine Betätigungskraft F_{B} mehr vorliegt, durch das Federelement 14 wieder in Richtung zur Unterseite 4 des Fadenmähkopfes 5 gedrückt und gegen den Gehäusedeckel 8 gespannt. Wie in Fig. 10 gezeigt, befindet sich die Weiterschaltvorrichtung dann in einem weiteren Abschnitt 32 des Außerbetriebszustandes, in der sich die Fadenspule 9 gegenüber dem Gehäuse 7 um einen zweiten Verdrehwinkel β der Fadenspule 9 weiter verdreht (Fig. 11), bis der Gegenanschlag 22 der Fadenspule 9 den Endanschlag 20 des Gehäusedeckels 8 kontaktiert. In dem weiteren Abschnitt 32 des Außerbetriebszustandes 31 der Weiterschaltvorrichtung 19 dreht sich die Fadenspule 9 gegenüber dem Gehäuse 7 entgegen der Drehrichtung 29 in die relative Drehrichtung 78 der Fadenspule 9 um den zweiten Verdrehwinkel β der Fadenspule 9. Anschließend ist eine in Drehrichtung 29 drehsichere Stellung, nämlich die Betriebsstellung 30 wieder erreicht und der Schneidfaden 6 um einen entsprechenden Gesamtwinkelabstand γ abgewickelt. Dabei entspricht der Gesamtwinkelabstand γ der Summe des ersten Verdrehwinkels α der Fadenspule 9 und des zweiten Verdrehwinkels β der Fadenspule 9.

Die reduzierte Bauhöhe des Fadenmähkopfes 5 wird dadurch erzielt, dass der Schlitz 24 in der oberen Spulenwand 11 der Fadenspule 9 ausgebildet ist. Dadurch unterliegt die Struktur der oberen Spulenwand vergleichsweise hohen Beanspruchungen. Damit in dem Außerbetriebszustand 31 der Weiterschaltvorrichtung 19 beim Kontakt des Eingriffselementes 25 mit dem Drehanschlag 23 keine zu großen Kräfte wirken und die obere Spulenwand 11 beschädigen, ist der Schlitz 24 entsprechend kurz auszubilden. Dies führt einerseits dazu, dass der Steg zwischen benachbarten Schlitzen möglichst groß bleibt und andererseits dazu, dass die Fadenspule 9 nur vergleichsweise kurz beschleunigen kann, bis der Drehanschlag 23 der Fadenspule 9 am Eingriffselement 25 anschlägt, wodurch die Kräfte beim Aufschlag des Eingriffselementes 25 auf den Drehanschlag 23 gering gehalten werden können. Die obere Spulenwand 11 wird somit nicht beschädigt.

In einem nicht dargestellten Ausführungsbeispiel kann selbiges Funktionsprinzip, den Drehanschlag 23 an einem Schlitz 24 auszubilden, auch auf den Endanschlag 20 und den Gegenanschlag 22 angewendet werden. So kann der Gegenanschlag 22 der unteren Spulenwand 13 ebenfalls an einem an der unteren Spulenwand 13 ausgebildeten Schlitz vorgesehen werden, so dass der Endanschlag 20 in den Schlitz eingreift.

Wie in Fig. 13 gezeigt, umfasst der Fadenmähkopf 5 einen Fadenkanal 61, der sich über den gesamten Durchmesser d der Fadenspule 9 erstreckt. Beim Aufwickeln des Schneidfadens 6 auf die Fadenspule 9 wird der Schneidfaden 6 durch den Fadenkanal 61 hindurchgeschoben und mittig zur Drehachse 10 ausgerichtet. Die Fadenspule 9 ist anschließend entgegen der Drehrichtung 29 gegenüber dem Gehäuse 7 zu drehen. Durch die Rampen 71 an den Endanschlägen 20, den Gegenanschlägen 22 und den Eingriffselementen 24 gleiten die entsprechenden Anschläge aufeinander ab und lassen somit eine Relativbewegung der Fadenspule 9 gegenüber dem Gehäuse 7 entgegen der Drehrichtung 29 zu. Dies ist durch die axiale Verschiebbarkeit der Fadenspule 9 gegenüber dem Gehäuse 7 möglich. In einer alternativen nicht dargestellten Ausführung des Fadenmähkopfes 5 kann es zweckmäßig sein, anstelle des einen Fadenkanals 61, zwei Fadenkanäle vorzusehen, die sich nicht über den gesamten Durchmesser b der Fadenspule 9 erstrecken. So können die alternativen Fadenkanäle auch als Sacklöcher ausgebildet sein.

Wie insbesondere in den Figuren 8 und 12 gezeigt, ist an der Umfangsseite 60 der Fadenspule 9 ein Spannring 18 zur Vermeidung eines unbeabsichtigten Abwickelns des Schneidfadens 6 angeordnet. Dadurch wird der Schneidfaden 6 zwischen der Längswand 55, den Spulenwänden 11, 12, 13 und dem Spannring 18 gehalten. Damit der Schneidfaden 6 durch die Fadenöffnungen 72 gefädelt werden kann, weist auch der Spannring 18 eine entsprechende Anzahl an Öffnungen 73 auf. Der Schneidfaden 6 ragt ausgehend von der Fadenspule 9 durch die Öffnungen 73 des Spannrings 18 nach außen durch die Fadenöffnungen 72. Damit die Öffnungen 73 des Spannrings 18 mit den Fadenöffnungen 72 am Gehäuse 7 deckungsgleich angeordnet sind, um den Schneidfaden 6 von außerhalb des Gehäuses 7 montieren zu können, ist der Spannring 18 am Gehäuse 7 formschlüssig gehalten. An dem Spannring 18 sind mehrere Schultern 74 ausgebildet, die an entsprechenden Gegenschultern 75 an der Innenwand des Gehäuses 7 um die Drehachse verlaufend formschlüssig anliegen. Dies hat zur Folge, dass bei Drehung der Fadenspule 9 der Spannring 18 drehfest mit dem Gehäuse 7 verbunden sich relativ zur Fadenspule 9 dreht und dabei den Schneidfaden 6 in der Fadenkammer 56 der Fadenspule 9 hält.

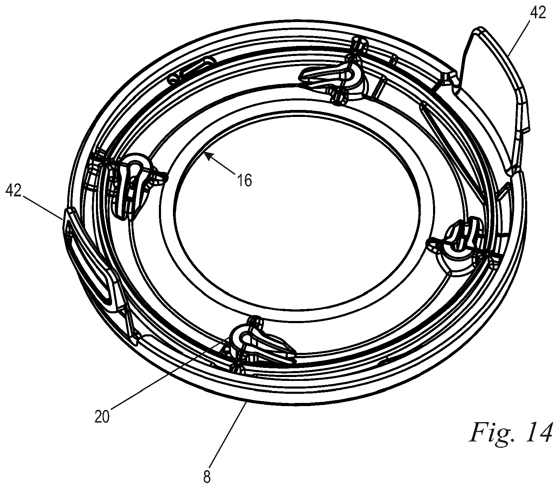

In Fig. 14 ist der Gehäusedeckel 8 gezeigt. In dieser Figur ist nochmals deutlich die Öffnung 16 des Gehäusedeckels 8 dargestellt, durch welche das Betätigungselement 15 in montiertem Zustand des Fadenmähkopfes 5 ragt. Zudem sind die Rastnasen 42 des Gehäusedeckels gezeigt, die gemeinsam mit den Rastöffnungen 41 des Gehäuses die Rastverbindungen 40 bilden. Zudem sind die vier Endanschläge 20 gezeigt, die mit den Gegenanschlägen 22 der Fadenspule 9 zusammenwirken.

## Patentansprüche

1. Fadenmähkopf zur Montage an einer Antriebswelle (2) eines Freischneiders (1), umfassend ein Gehäuse (7), eine Fadenspule (9) für einen Schneidfaden (6) mit mindestens einer Spulenwand (11, 12, 13), einen Gehäusedeckel (8) und eine Weiterschaltvorrichtung (19), wobei die Fadenspule (9) um eine Drehachse (10) drehbar gelagert ist und, umfassend ein Federelement (14), wobei die Weiterschaltvorrichtung (19) einen Endanschlag (20) umfasst und die Fadenspule (9) in der Betriebsstellung (30) durch den Endanschlag (20) mit dem Gehäuse (7) drehfest verbunden ist, wobei die Weiterschaltvorrichtung (19) einen Drehanschlag (23) umfasst, der eine Verdrehung der Fadenspule (9) gegenüber dem Gehäuse (7) in den Außerbetriebszustand (31) begrenzt, wobei der Drehanschlag (23) an einem Schlitz (24) in der Spulenwand (11, 12, 13) der Fadenspule (9) ausgebildet ist, wobei die Fadenspule (9) zwischen dem Gehäuse (7) und dem Gehäusedeckel (8) in Richtung der Drehachse (10) verschiebbar gehalten ist, und dass die Fadenspule (9) durch das Federelement (14) in eine Betriebsstellung (30) des Fadenmähkopfes (5) vorgespannt ist, und dass die Fadenspule (9) von der Betriebsstellung (30) in Richtung der Drehachse (10) in einen Außerbetriebszustand (31) des Fadenmähkopfes (5) zum Nachführen eines auf die Fadenspule (9) aufgewickelten Schneidfadens (6) durch das Aufbringen einer auf die Weiterschaltvorrichtung (19) wirkenden Betätigungskraft (F_{B}) verstellbar ist, **dadurch gekennzeichnet, dass** der Schlitz (24) als eine Öffnung (27) ausgebildet ist.

2. Fadenmähkopf nach Anspruch 1,
**dadurch gekennzeichnet, dass** am Gehäuse (7) ein in dem Außerbetriebszustand (31) mit dem Schlitz (24) zusammenwirkendes Eingriffselement (25) angeordnet ist.

3. Fadenmähkopf nach Anspruch 1 oder 2,
**dadurch gekennzeichnet, dass** die Fadenspule (9) eine zum Gehäuse (7) benachbarte, obere Spulenwand (11) aufweist, wobei der Schlitz (24) an der oberen Spulenwand (11) der Fadenspule (9) ausgebildet ist.

4. Fadenmähkopf nach einem der Ansprüche 1 bis 3,
**dadurch gekennzeichnet, dass** sich der Schlitz (24) über einen Winkelabschnitt (δ) kreisbogenförmig um die Drehachse (10) erstreckt, wobei der Winkelabschnitt (δ) zwischen 30° und 70° beträgt.

5. Fadenmähkopf nach einem der Ansprüche 1 bis 4,
**dadurch gekennzeichnet, dass** an dem Drehanschlag (23) des Schlitzes (24) eine Strukturerhebung (36) vorgesehen ist.

6. Fadenmähkopf nach einem der Ansprüche 1 bis 5,
**dadurch gekennzeichnet, dass** die Fadenspule (9) ein Nabensegment (76) zur Lagerung der Fadenspule (9) gegenüber dem Gehäuse (7) und ein an das Nabensegment (76) anschließendes Fadenkammersegment (77) zum Aufwickeln des Schneidfadens (6) umfasst, wobei der Schlitz (24) im Fadenkammersegment (77) ausgebildet ist.

7. Fadenmähkopf nach einem der Ansprüche 1 bis 6,
**dadurch gekennzeichnet, dass** der Endanschlag (20) der Weiterschaltvorrichtung (19) am Gehäusedeckel (8) angeordnet ist und dass die Weiterschaltvorrichtung (19) einen an der Fadenspule (9) angeordneten Gegenanschlag (22) umfasst.

8. Fadenmähkopf nach Anspruch 7,
**dadurch gekennzeichnet, dass** der Gegenanschlag (22) in der Betriebsstellung (30) mit dem Endanschlag (20) zur drehfesten Verbindung zwischen der Fadenspule (9) und dem Gehäuse (7) im Eingriff ist.

9. Fadenmähkopf nach einem der Ansprüche 1 bis 8,
**dadurch gekennzeichnet, dass** die Weiterschaltvorrichtung (19) derart ausgebildet ist, dass sich die Fadenspule (9) gegenüber dem Gehäuse (7) mit Betätigung der Weiterschaltvorrichtung (19) in den Außerbetriebszustand (31) bis zum Anschlagen des Drehanschlags (23) an dem Eingriffselement (25) um einen ersten Verdrehwinkel (α) verdreht.

10. Fadenmähkopf nach Anspruch 9,
**dadurch gekennzeichnet, dass** sich die Fadenspule (9) gegenüber dem Gehäuse (7) ausgehend vom Anschlagen des Drehanschlags (23) an dem Eingriffselement (25) bis zum Anschlagen des Gegenanschlags (22) an dem Endanschlag (20) um einen zweiten Verdrehwinkel (β) verdreht, wobei ein Gesamtdrehwinkel (µ) der Summe aus dem ersten Verdrehwinkel (α) und dem zweiten Verdrehwinkel (β) entspricht.

11. Fadenmähkopf nach einem der Ansprüche 1 bis 10,
**dadurch gekennzeichnet, dass** die Betätigungskraft (F_{B}) über ein Betätigungselement (15) auf die Weiterschaltvorrichtung (19) aufgebracht wird, wobei sich das Betätigungselement (15) aus einer Öffnung (16) des Gehäusedeckels (8) weg vom Gehäuse (7) erstreckt.

12. Fadenmähkopf nach einem der Ansprüche 1 bis 11,
**dadurch gekennzeichnet, dass** die Fadenspule (9) durch das Federelement (14) gegen den Gehäusedeckel (8) vorgespannt ist.

13. Fadenmähkopf nach einem der Ansprüche 1 bis 12,
**dadurch gekennzeichnet, dass** der Schlitz (24) von einer den Schlitz (24) umlaufenden Umfangswand (60) begrenzt ist.

14. Fadenmähkopf nach einem der Ansprüche 1 bis 13,
**dadurch gekennzeichnet, dass** die Fadenspule (9) einen Fadenkanal (61) zum Einführen, insbesondere zum Durchführen, eines Schneidfadens (6) umfasst.

## Claims

1. Trimmer line mowing head for mounting on a drive shaft (2) of a brush cutter (1), comprising a housing (7), a trimmer line spool (9) for a cutting trimmer line (6) having at least one spool wall (11, 12, 13), a housing cover (8) and an indexing device (19), wherein the trimmer line spool (9) is mounted such that it can rotate about an axis of rotation (10), and comprising a spring element (14), wherein the indexing device (19) comprises an end stop (20) and, in the operational position (30), the trimmer line spool (9) is co-rotationally connected to the housing (7) by the end stop (20), wherein the indexing device (19) comprises a rotary stop (23), which limits a rotation of the trimmer line spool (9) with respect to the housing (7) in the non-operational state (31), wherein the rotary stop (23) is formed on a slot (24) in the spool wall (11, 12, 13) of the trimmer line spool (9),
wherein the trimmer line spool (9) is held between the housing (7) and the housing cover (8) such that it can be displaced in the direction of the axis of rotation (10), and the trimmer line spool (9) is preloaded by the spring element (14) into an operational position (30) of the trimmer line mowing head (5) and, by means of the application of an actuating force (F_{B}) acting on the indexing device (19), the trimmer line spool (9) can be displaced in the direction of the axis of rotation (10) from the operational position (30) into a non-operational state (31) of the trimmer line mowing head (5) in order to pay out a cutting trimmer line (6) wound onto the trimmer line spool (9), **characterized in that** the slot (24) is formed as an opening (27).

2. Trimmer line mowing head according to Claim 1,
**characterized in that** an engagement element (25) interacting with the slot (24) in the non-operational state (31) is arranged on the housing (7).

3. Trimmer line mowing head according to Claim 1 or 2,
**characterized in that** the trimmer line spool (9) has an upper spool wall (11) adjacent to the housing (7), wherein the slot (24) is formed on the upper spool wall (11) of the trimmer line spool (9).

4. Trimmer line mowing head according to one of Claims 1 to 3,
**characterized in that** the slot (24) extends in the form of a circular arc about the axis of rotation (10) over an angular portion (δ), wherein the angular portion (δ) is between 30° and 70°.

5. Trimmer line mowing head according to one of Claims 1 to 4,
**characterized in that** a structural elevation (36) is provided on the rotary stop (23) of the slot (24).

6. Trimmer line mowing head according to one of Claims 1 to 5,
**characterized in that** the trimmer line spool (9) comprises a hub segment (76) for supporting the trimmer line spool (9) with respect to the housing (7), and a trimmer line chamber segment (77) adjoining the hub segment (76) for winding up the cutting trimmer line (6), wherein the slot (24) is formed in the trimmer line chamber segment (77).

7. Trimmer line mowing head according to one of Claims 1 to 6,
**characterized in that** the end stop (20) of the indexing device (19) is arranged on the housing cover (8), and **in that** the indexing device (19) comprises a mating stop (22) arranged on the trimmer line spool (9).

8. Trimmer line mowing head according to Claim 7,
**characterized in that**, in the operational position (30), the mating stop (22) is in engagement with the end stop (20) for the co-rotational connection between the trimmer line spool (9) and the housing (7).

9. Trimmer line mowing head according to one of Claims 1 to 8,
**characterized in that** the indexing device (19) is formed in such a way that, when the indexing device (19) is actuated in the non-operational state (31), the trimmer line spool (9) rotates with respect to the housing (7) through a first angle of rotation (α) until the rotary stop (23) strikes the engagement element (25).

10. Trimmer line mowing head according to Claim 9,
**characterized in that**, starting from the rotary stop (23) striking the engagement element (25) until the mating stop (22) strikes the end stop (20), the trimmer line spool (9) rotates with respect to the housing (7) through a second angle of rotation (β), wherein a total angle of rotation (µ) corresponds to the sum of the first angle of rotation (α) and the second angle of rotation (β).

11. Trimmer line mowing head according to one of Claims 1 to 10,
**characterized in that** the actuating force (F_{B}) is applied to the indexing device (19) via an actuating element (15), wherein the actuating element (15) extends away from the housing (7) out of an opening (16) in the housing cover (8).

12. Trimmer line mowing head according to one of Claims 1 to 11,
**characterized in that** the trimmer line spool (9) is preloaded against the housing cover (8) by the spring element (14).

13. Trimmer line mowing head according to one of Claims 1 to 12,
**characterized in that** the slot (24) is delimited by a circumferential wall (60) running around the slot (24).

14. Trimmer line mowing head according to one of Claims 1 to 13,
**characterized in that** the trimmer line spool (9) comprises a trimmer line channel (61) for a cutting trimmer line (6) to be inserted, in particular to be led through.

## Revendications

1. Tête de faucheuse à monter sur un arbre d'entraînement (2) d'une débroussailleuse (1), comprenant un boîtier (7), une bobine de fil (9) pour un fil de coupe (6) avec au moins une paroi de bobine (11, 12, 13), un couvercle de boîtier (8) et un dispositif d'avancement (19), la bobine de fil (9) étant montée de manière rotative autour d'un axe de rotation (10), et comprenant un élément de ressort (14), le dispositif d'avancement (19) comprenant une butée d'extrémité (20) et la bobine de fil (9), dans la position de fonctionnement (30), étant reliée de manière immobile en rotation au boîtier (7) par la butée d'extrémité (20), le dispositif d'avancement (19) comprenant une butée de rotation (23) qui limite une rotation de la bobine de fil (9) par rapport au boîtier (7) dans l'état de non-fonctionnement (31), la butée de rotation (23) étant réalisée sur une fente (24) dans la paroi de bobine (11, 12, 13) de la bobine de fil (9),
la bobine de fil (9) étant maintenue entre le boîtier (7) et le couvercle de boîtier (8) de manière à pouvoir coulisser dans la direction de l'axe de rotation (10), et la bobine de fil (9) étant précontrainte par l'élément de ressort (14) dans une position de fonctionnement (30) de la tête de faucheuse (5), et la bobine de fil (9) pouvant être déplacée de la position de fonctionnement (30) en direction de l'axe de rotation (10) dans un état de non-fonctionnement (31) de la tête de faucheuse (5) pour l'asservissement d'un fil de coupe (6) enroulé sur la bobine de fil (9) par l'application d'une force d'actionnement (F_{B}) agissant sur le dispositif d'avancement (19), **caractérisée en ce que** la fente (24) est réalisée sous la forme d'une ouverture (27).

2. Tête de faucheuse selon la revendication 1,
**caractérisée en ce qu'**un élément d'engagement (25) coopérant avec la fente (24) dans l'état de non-fonctionnement (31) est agencé sur le boîtier (7).

3. Tête de faucheuse selon la revendication 1 ou 2,
**caractérisée en ce que** la bobine de fil (9) présente une paroi de bobine supérieure (11) voisine du boîtier (7), la fente (24) étant réalisée sur la paroi de bobine supérieure (11) de la bobine de fil (9).

4. Tête de faucheuse selon l'une quelconque des revendications 1 à 3,
**caractérisée en ce que** la fente (24) s'étend sur une section angulaire (δ) en forme d'arc de cercle autour de l'axe de rotation (10), la section angulaire (δ) étant comprise entre 30° et 70°.

5. Tête de faucheuse selon l'une quelconque des revendications 1 à 4,
**caractérisée en ce qu'**un bossage structurel (36) est prévu sur la butée de rotation (23) de la fente (24).

6. Tête de faucheuse selon l'une quelconque des revendications 1 à 5,
**caractérisée en ce que** la bobine de fil (9) comprend un segment de moyeu (76) pour le montage de la bobine de fil (9) par rapport au boîtier (7) et un segment de chambre à fil (77) se raccordant au segment de moyeu (76) pour l'enroulement du fil de coupe (6), la fente (24) étant réalisée dans le segment de chambre à fil (77).

7. Tête de faucheuse selon l'une quelconque des revendications 1 à 6,
**caractérisée en ce que** la butée d'extrémité (20) du dispositif d'avancement (19) est agencée sur le couvercle de boîtier (8) et **en ce que** le dispositif d'avancement (19) comprend une contre-butée (22) agencée sur la bobine de fil (9).

8. Tête de faucheuse selon la revendication 7,
**caractérisée en ce que** la contre-butée (22) est en prise avec la butée d'extrémité (20) dans la position de fonctionnement (30) pour la liaison immobile en rotation entre la bobine de fil (9) et le boîtier (7).

9. Tête de faucheuse selon l'une quelconque des revendications 1 à 8,
**caractérisée en ce que** le dispositif d'avancement (19) est réalisé de telle sorte que la bobine de fil (9) tourne d'un premier angle de rotation (α) par rapport au boîtier (7) lors d'un actionnement du dispositif d'avancement (19) dans l'état de non-fonctionnement (31) jusqu'à la butée de la butée de rotation (23) sur l'élément d'engagement (25).

10. Tête de faucheuse selon la revendication 9,
**caractérisée en ce que** la bobine de fil (9) tourne d'un deuxième angle de rotation (β) par rapport au boîtier (7) à partir de la butée de la butée de rotation (23) sur l'élément d'engagement (25) jusqu'à la butée de la contre-butée (22) sur la butée d'extrémité (20), un angle de rotation total (µ) étant la somme du premier angle de rotation (α) et du deuxième angle de rotation (β).

11. Tête de faucheuse selon l'une quelconque des revendications 1 à 10,
**caractérisée en ce que** la force d'actionnement (F_{B}) est appliquée au dispositif d'avancement (19) par l'intermédiaire d'un élément d'actionnement (15), l'élément d'actionnement (15) s'étendant à partir d'une ouverture (16) du couvercle de boîtier (8) en s'éloignant du boîtier (7).

12. Tête de faucheuse selon l'une quelconque des revendications 1 à 11,
**caractérisée en ce que** la bobine de fil (9) est précontrainte contre le couvercle de boîtier (8) par l'élément de ressort (14).

13. Tête de faucheuse selon l'une quelconque des revendications 1 à 12,
**caractérisée en ce que** la fente (24) est délimitée par une paroi périphérique (60) entourant la fente (24).

14. Tête de faucheuse selon l'une quelconque des revendications 1 à 13,
**caractérisée en ce que** la bobine de fil (9) comprend un canal de fil (61) pour l'introduction, notamment le passage, d'un fil de coupe (6).
